# EUROPEAN PATENT APPLICATION

(11) **EP 1 108 598 A2**
(43) Date of publication of application: **20.06.2001**
(21) Application number: 00204627.4
(22) Date of filing: 18.12.2000
(51) Int. Cl.: B60K 15/03

(54) **Permeation barrier fuel tank**

(30) Priority: 18.12.1999 US 172559 P; 30.08.2000 US 650895
(71) Applicant: Delphi Technologies, Inc., Troy, MI 48007 (US)
(72) Inventor: Ellis, Thomas S., Romeao, MI 48065 (US)
(74) Representative: Denton, Michael John

(57) **Abstract**

A permeation barrier fuel tank (10) for a vehicle includes a tank shell (12) having a wall formed from a plurality of layers (30,32,34). The layers (30,32,34) include at least an inner layer (30), an outer layer (34) and a fuel permeation barrier layer (32) disposed between the inner layer (30) and the outer layer (34) and being made of a nanocomposite polymer.

## Description

### TECHNICAL FIELD

The present invention relates generally to fuel tanks for vehicles and, more particularly, to a permeation barrier fuel tank for a vehicle.

### BACKGROUND OF THE INVENTION

It is known to provide a fuel tank such as a plastic fuel tank in a vehicle to hold fuel to be used by an engine of the vehicle. In some vehicles, the plastic fuel tank is made from polymers that are typically multi-layer structures in which one or more barrier polymer layers are introduced to prevent unacceptable loss of fuel to atmosphere because of permeation through walls of the fuel tank. For example, a fuel tank may be composed of high density polyethylene (HDPE) in which a layer of a barrier polymer, such as a polyamide or an ethylene-vinyl alcohol copolymer has been fabricated.

One commercial approach to resolve this concern regarding permeation is to thicken the walls of the fuel tank, which increases the weight, cost and reduces fuel capacity of the fuel tank. Another commercial approach is to add metal sheets or shields to the fuel tank, which increases the weight and cost of the plastic fuel tank.

Therefore, it is desirable to provide a fuel tank for a vehicle that has a more effective fuel permeation barrier to prevent evaporative emissions. It is also desirable to provide a permeation barrier fuel tank for a vehicle that significantly reduces evaporative emissions, weight and cost of the fuel tank.

### SUMMARY OF THE INVENTION

It is, therefore, one object of the present invention to provide a new permeation barrier fuel tank for a vehicle.

It is another object of the present invention to provide a fuel tank that significantly reduces evaporative emissions without unduly increasing weight and cost.

To achieve the foregoing objects, the present invention is a permeation barrier fuel tank for a vehicle including a tank shell having a wall formed from a plurality of layers. The layers include at least an inner layer, an outer layer, and a fuel permeation barrier layer disposed between the inner layer and the outer layer and being made of a nanocomposite polymer.

One advantage of the present invention is that a permeation barrier fuel tank is provided for a vehicle that has enhanced resistance to fuel permeation leading to less evaporative emissions. Another advantage of the present invention is that the permeation barrier fuel tank incorporates a nanocomposite polymer fuel permeation barrier layer, resulting in cost savings of the fuel tank. Yet another advantage of the present invention is that the permeation barrier fuel tank significantly improves performance by reducing volatile fuel emissions into the atmosphere. Still another advantage of the present invention is that the permeation barrier fuel tank can still be manufactured using existing thermoforming processes.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a permeation barrier fuel tank, according to the present invention.

Figure 2 is a sectional view taken along line 2-2 of Figure 1.

### DESCRIPTION OF THE PREFERRED EMBODIMENT

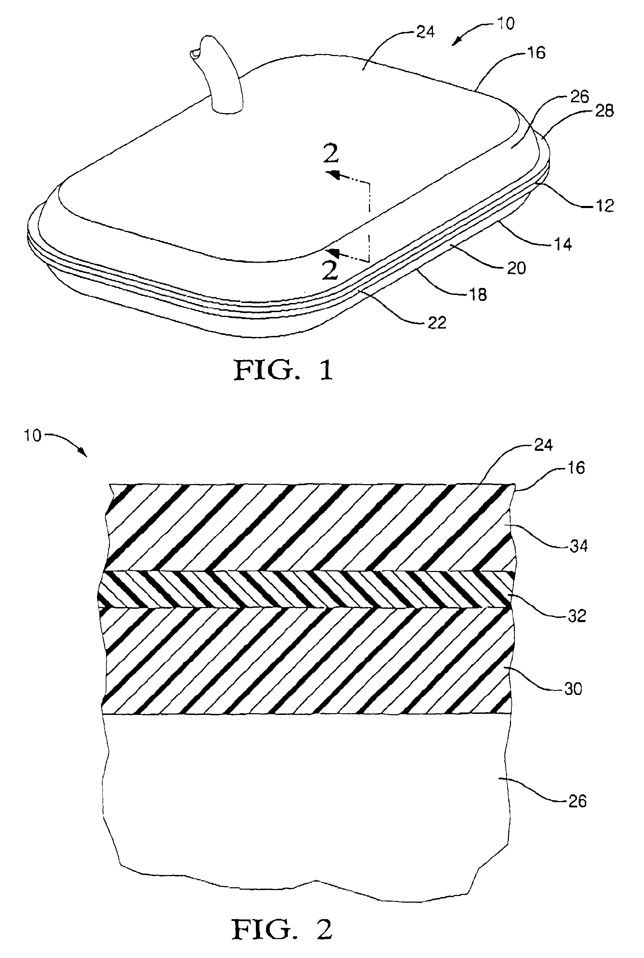

Referring to the drawings and in particular Figures 1 and 2, one embodiment of a permeation barrier fuel tank 10, according to the present invention, is shown for a vehicle (not shown). The permeation barrier fuel tank 10 includes a tank shell 12. In the embodiment illustrated, the tank shell 12 is of a generally rectangular type. The tank shell 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together to form a seam by suitable means such as by thermoforming, compression molding or friction welding. The lower half shell 14 and upper half shell 16 are made of a rigid material such as a thermoformable plastic.

Referring to Figures 1 and 2, the permeation barrier fuel tank 10 has the base walls 18,24, side walls 20,26, and flanges 22,28 formed from a plurality of layers 30,32,34. The first or inner layer 30 is made from a thermoformable polymer such as a high density polyethylene (HDPE) or similar polyolefin, which is a conventional material known in the art. The inner layer 30 has a predetermined thickness of approximately two millimeters (2.00 mm).

The second or fuel permeation barrier layer 32 is made from a nanocomposite polymer as a barrier layer between the inner layer 30 and an outer layer 34. The nanocomposite polymer is a polymer material such as polyamides, ethylene vinyl alcohol (EVOH) copolymers, polyesters or blends thereof in which a small quantity from about 0 wt.% to about 15 wt.% of a platy filler material has been uniformly dispersed. The platy filler material has particles with a high aspect ratio of about two hundred (200) to about one thousand (1000) where the thickness is of the order of one nanometer (1 nm). The fuel permeation barrier layer 32 has a predetermined thickness of approximately 0.1 mm to approximately 1.0 mm or two percent to approximately six percent of a total thickness of the layers.

The third or outer layer 34 is made from a thermoformable polymer such as a high density polyethylene (HDPE) or similar polyolefin, which is a conventional material known in the art. The outer layer 34 has a predetermined thickness of approximately two millimeters (2.00 mm).

In manufacturing the permeation barrier fuel tank 10, several conventional processes may be used. Preferably, the permeation barrier fuel tank 10 is formed by a conventional thermoforming process wherein the fuel permeation barrier layer 32 can be thermoformed along with the inner layer 30 and outer layer 34 by heat and pressure. The presence of the platy filler material presents an efficient obstacle to the transport, i.e. diffusion, of penetrant molecules, such as those normally found in fuels. It should be appreciated that the incorporation of a polymer nanocomposite as the barrier layer for the fuel permeation barrier layer 32 in a fuel tank provides a significant improvement over conventional barrier materials in preventing permeation of fuel to the atmosphere. It should also be appreciated that nanocomposite polymer of the fuel permeation barrier layer 32 can be included in the assembly of the permeation barrier fuel tank 12 by conventional thermoforming techniques, for example, extrusion, lamination, etc., currently used for existing fuel tanks.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A permeation barrier fuel tank (10) for a vehicle comprising:
a tank shell (12) having a wall formed from a plurality of layers (30,32,34);
said layers (30,32,34) comprising at least an inner layer (30), an outer layer (34) and a fuel permeation barrier layer (32) disposed between said inner layer (30) and said outer layer (34) and being made of a nanocomposite polymer.

2. A permeation barrier fuel tank (10) as set forth in claim 1 wherein said inner layer (30) and said outer layer (34) are made of a thermoformable polymer.

3. A permeation barrier fuel tank (10) as set forth in claim 2 wherein said thermoformable polymer is a polyethylene material.

4. A permeation barrier fuel tank (10) as set forth in claim 2 wherein said nanocomposite polymer comprises a polymer material including a predetermined amount of a platy filler material.

5. A permeation barrier fuel tank (10) as set forth in claim 4 wherein said platy filler material is uniformly dispersed in said polymer material.

6. A permeation barrier fuel tank (10) as set forth in claim 4 wherein said platy filler material is present in an amount from about 0 wt.% to about 15 wt.%.

7. A permeation barrier fuel tank (10) as set forth in claim 4 wherein said platy filler material has an aspect ratio from about 200 to about 1000.

8. A permeation barrier fuel tank (10) as set forth in claim 1 wherein said fuel permeation barrier layer (32) has a thickness of about two percent to about six percent of a total thickness of said layers (30,32,34).

9. A permeation barrier fuel tank (10) as set forth in claim 1 wherein said inner layer (30) and said outer layer (34) are made of a high density polyethylene.

10. A permeation barrier fuel tank (10) for a vehicle comprising:
a tank shell (12) having a wall formed from a plurality of layers (30,32,34);
said layers (30,32,34) comprising at least an inner layer (30) and an outer layer (34) being made of a thermoformable polymer; and
a fuel permeation barrier layer (32) disposed between said inner layer (30) and said outer layer (34) and being made of a nanocomposite polymer.

11. A permeation barrier fuel tank (10) as set forth in claim 10 wherein said thermoformable polymer is a polyethylene material.

12. A permeation barrier fuel tank (10) as set forth in claim 10 wherein said nanocomposite polymer comprises a polymer material including a predetermined amount of a platy filler material.

13. A permeation barrier fuel tank (10) as set forth in claim 12 wherein said platy filler material is uniformly dispersed in said polymer material.

14. A permeation barrier fuel tank (10) as set forth in claim 12 wherein said platy filler material is present in an amount from about 0 wt.% to about 15 wt.%.

15. A permeation barrier fuel tank (10) as set forth in claim 12 wherein said platy filler material has an aspect ratio from about 200 to about 1000.

16. A permeation barrier fuel tank (10) as set forth in claim 10 wherein said fuel permeation barrier layer (32) has a thickness of about 0.1 mm to about 1.0 mm.

17. A permeation barrier fuel tank (10) as set forth in claim 10 wherein said inner layer (30) and said outer layer (34) are made of a high density polyethylene.

18. A fuel tank (10) for a vehicle comprising:
a tank shell (12) having a wall formed from a plurality of layers (30,32,34);
said layers (30,32,34) comprising at least an inner layer (30) and an outer layer (34) comprising a polyethylene material; and
a fuel permeation barrier layer (32) disposed between said inner layer (30) and said outer layer (34) and being made of a nanocomposite polymer comprising a polymer material including a predetermined amount of a platy filler material having a thickness of about one nanometer.
